# EUROPÄISCHE PATENTSCHRIFT

(11) **EP 3 376 907 B1**
(45) Veröffentlichungstag und Bekanntmachung des Hinweises auf die Patenterteilung: **21.08.2019**
(21) Anmeldenummer: 16798676.9
(22) Anmeldetag: 11.11.2016
(51) Int. Cl.: A47C 31/00, H04W 48/04, A47C 20/04

(54) **ELEKTROMOTORISCHER MÖBELANTRIEB, MÖBEL UND VERFAHREN ZUM STEUERN EINES ELEKTROMOTORISCHEN MÖBELANTRIEBS**
ELECTRIC MOTOR-DRIVEN FURNITURE DRIVE, FURNITURE AND METHODS FOR CONTROLLING AN ELECTRIC MOTOR-DRIVEN FURNITURE DRIVE
DISPOSITIF D'ENTRAÎNEMENT POUR MEUBLE À MOTEUR ÉLECTRIQUE, MEUBLE ET PROCÉDÉ POUR COMMANDER UN DISPOSITIF D'ENTRAÎNEMENT POUR MEUBLE À MOTEUR ÉLECTRIQUE

(30) Priorität: 16.11.2015 DE 202015106208 U
(43) Veröffentlichungstag der Anmeldung: 26.09.2018
(73) Patentinhaber: DewertOkin GmbH, 32278 Kirchlengern (DE)
(72) Erfinder: VIERMANN, Thomas, 32584 Löhne (DE); KRACHT, Werner, 32609 Hüllhorst (DE); TEWS, Alexander, 33607 Bielefeld (DE)
(74) Vertreter: Kleine, Hubertus
(86) Internationale Anmeldenummer: PCT/EP2016/077490
(87) Internationale Veröffentlichungsnummer: WO 2017/084984

(56) Entgegenhaltungen:
- US-A1- 2006 058 587
- US-A1- 2015 019 020
- US-A1- 2015 082 542
- US-A1- 2015 189 425

## Beschreibung

Die Erfindung betrifft einen elektromotorischen Möbelantrieb mit einer Anzahl von Verstellantrieben zur elektromotorischen Bewegung wenigstens eines beweglichen Möbelbauteils relativ zu einem weiteren Möbelbauteil, einer Steuereinrichtung und einer mit der Steuereinrichtung gekoppelten Kommunikationseinheit zum Empfangen von drahtlosen Signalen einer Fernbedienung, wobei die Verstellantriebe in Abhängigkeit empfangener drahtloser Signale angesteuert werden. Die Erfindung betrifft weiterhin Verfahren zum Steuern eines elektromotorischen Möbelantriebs und ein Möbel mit einem elektromotorischen Möbelantrieb.

Zur Steuerung der Verstellantriebe elektromotorischer Möbelantriebe sind Handbedienungen gebräuchlich, die z.B. über ein Kabel mit der Steuereinrichtung gekoppelt sind. Derartige Handbedienungen sind zuverlässig, jedoch aufgrund des Kabels unflexibel zu benutzen. Bei elektromotorischen Möbelantrieben sind alternativ drahtlose Handbedienungen verbreitet, die flexibler und bequemer zu nutzen sind. Eine Kombination beider Bedienmöglichkeiten ist in der Druckschrift WO 2006/039929 A2 beschrieben. Dabei ist ein einer kabelgebundenen Handbedienung eine Kommunikationseinheit angeordnet, die drahtlose Signale einer Fernbedienung empfängt und an die Steuereinrichtung weiterleitet. Die drahtlose Übertragung erfolgt dabei über InfrarotLicht.

Inzwischen sind zudem Möbelantriebe bekannt, bei denen eine Funkübertragung anstelle einer Infrarot-Übertragung eingesetzt wird. Das hat beispielsweise den Vorteil, dass Mobilgeräte wie Smartphones mittels einem dafür vorgesehenen Programm ("App") als Fernbedienung verwendet werden können, da diese in der Regel mit geeigneten drahtlosen Übertragungseinrichtungen (Kommunikationseinheiten) ausgestattet sind, um beispielsweise eine Kommunikation gemäß dem Bluetooth- oder WLAN-Standard durchführen zu können.

Während bei der Infrarot-Übertragung gemäß der Druckschrift WO 2006/039929 A2 eine Ansteuerung der Verstellantriebe nur in Sichtweite möglich ist, kann bei funk-basierten Übertragungen jedoch eine (ungewollte) Betätigung auch außerhalb der Sichtweite, z.B. aus einem Nachbarraum heraus erfolgen. Dieses kann im ungünstigsten Fall zu einer Beeinträchtigung oder gar Verletzung einer Person führen, die das elektromotorisch verstellbare Möbel nutzt. Weitere relevante Dokumente des Standes der Technik sind:

US 2015/019020 A1, US 2015/189425 A1, US 2015/082542 A1, US 2006/058587 A1.

Der Erfindung liegt die Aufgabe zu Grunde, eine Fernbedienungsmöglichkeit für elektromotorische Möbelantriebe bereit zu stellen, bei der die Gefahr einer derartigen ungewollten Betätigung verhindert ist.

Diese Aufgabe wird durch einen elektromotorischen Möbelantrieb, ein Möbel und ein Verfahren zum Steuern eines elektromotorischen Möbelantriebs mit den Merkmalen des jeweiligen unabhängigen Anspruchs gelöst. Vorteilhafte Ausgestaltungen sind Gegenstand der abhängigen Ansprüche.

Ein erfindungsgemäßer elektromotorischer Möbelantrieb zeichnet sich dadurch aus, dass die Kommunikationseinheit dazu eingerichtet ist, eine Signalstärke des empfangenen drahtlosen Signals (Funksignals) zu bestimmen, und dass die Steuereinrichtung dazu eingerichtet ist, die Verstellantriebe nur dann anzusteuern, wenn die Signalstärke in ihrer Höhe einen vorgegebenen Schwellenwert übersteigt.

Ein erstes erfindungsgemäßes Verfahren weist die folgenden Schritte auf: Es werden drahtlose Signale von der Fernbedienung zu der Kommunikationseinheit gesendet und diese von der Kommunikationseinheit empfangen. Es werden dann zum einen Steuersignale aus den empfangenen drahtlosen Signalen ermittelt und zum anderen eine Signalstärke der empfangenen drahtlosen Signale bestimmt. Die bestimmte Signalstärke wird mit einem vorgegebenen Schwellenwert verglichen, woraufhin mindestens ein Verstellantrieb dann und nur dann gemäß den Steuersignalen angesteuert wird, wenn die Signalstärke in ihrer Höhe den vorgegebenen Schwellenwert übersteigt. Wenn dagegen die Signalstärke in ihrer Höhe den vorgegebenen Schwellenwert nicht übersteigt, werden die Steuersignale ignoriert.

Ist die Funkübertragungsstrecke zwischen der Fernbedienung und der Kommunikationseinheit als bidirektionale Übertragungsstrecke ausgebildet, so kann alternativ ein zweites erfindungsgemäßes Verfahren mit den folgenden Schritten durchgeführt werden: Es werden drahtlose Signalen von der Kommunikationseinheit zu der Fernbedienung gesendet, beispielsweise im Rahmen von Protokollverhandlungen oder Empfangsbestätigungen. Die drahtlosen Signale werden durch die Fernbedienung empfangen und es wird eine Signalstärke der empfangenen drahtlosen Signale bestimmt. Die Signalstärke wird mit einem vorgegebenen Schwellenwert verglichen. Nur wenn die Signalstärke in ihrer Höhe den vorgegebenen Schwellenwert übersteigt, werden drahtlosen Signale, diesmal von der Fernbedienung zu der Kommunikationseinheit gesendet, um mindestens einen Verstellantrieb anzusteuern.

Bei den erfindungsgemäßen Verfahren bzw. bei dem erfindungsgemäßen Möbelantrieb wird durch die Berücksichtigung der Empfangssignalstärke verhindert, dass eine zu weit entfernte und damit z.B. sich nicht mehr in Sichtweite befindende Fernbedienung zur Betätigung der Verstellantriebe benutzt werden kann. Die das Möbel nutzende Person wird so vor eventuell folgenschweren Fehlbetätigungen des Möbelantriebs geschützt.

In einer vorteilhaften Ausgestaltung des Verfahrens wird der Schwellenwert aus der Höhe der Signalstärke eines zuvor während einer Anlernphase empfangenen drahtlosen Signals bestimmt. Auf diese Weise kann der Antrieb an die räumlichen Gegebenheiten angepasst werden, so dass eine Bedienung von innerhalb des Raums möglich ist, eine durch eine Wand erfolgende Bedienung aufgrund der geringeren Signalstärke aber unterbunden ist.

Alternativ ist vorgesehen, den Schwellenwert manuell an die räumlichen Gegebenheiten anzupassen. Die Anpassung ist mittels der Fernbedienung oder mittels einer optionalen zusätzlichen Handbedienung vorgesehen. Dazu werden Fernbedienung oder Handbedienung in einen Schwellenwertanpassungsmodus versetzt und anschließend erfolgt das Setzen des Schwellenwertes durch manuelle Eingabe über Tasten, über Schalter, über eine Tastatur, über ein berührungssensitives Eingabefeld oder durch Eingabe eines Zahlenwertes.

In einer vorteilhaften Ausgestaltung des Möbelantriebs ist vorgesehen, dass die Kommunikationseinheit ein Steuersignal abgibt, das den Inhalt der empfangenen drahtlosen Signale wiedergibt, und ein Empfangsstärkesignal abgibt, das die Signalstärke des empfangenen drahtlosen Signals wiedergibt.

Alternativ kann die detektierte Signalstärke als Zahlenwert oder als Entfernungswert z.B. in Metern abgebildet werden, wobei der Zahlenwert oder der Entfernungswert zur Höhe des Signals korrespondiert. Der Zahlenwert der Signalstärke kann dann zur weiteren Auswertung und zum Vergleich mit dem Schwellenwert verwendet werden.

Bevorzugt weist die Steuereinrichtung einen Diskriminator auf, der mit der Kommunikationseinheit verbunden ist und der das Steuersignal nur dann weiterleitet, wenn das Empfangsstärkesignal in seiner Höhe den vorgegebenen Schwellenwert übersteigt. Die Kommunikationseinheit und/oder der Diskriminator können dabei in die Steuereinrichtung integriert sein.

In einer weiteren vorteilhaften Ausgestaltung des Möbelantriebs ist die Steuereinrichtung mit einer Handbedienung verbunden, über die die Verstellantriebe kabelgebunden gesteuert werden können. Dabei können die Kommunikationseinheit und/oder der Diskriminator in der Handbedienung integriert sein, wodurch eine leichte Nachrüstbarkeit auch von Steuereinrichtungen möglich ist, die zunächst nicht für eine Fernbedienbarkeit ausgestattet sind.

In einer alternativen Ausgestaltung ist der elektromotorische Möbelantrieb mit einer Kommunikationseinheit und/oder einem Diskriminator versehen, wobei die Kommunikationseinheit und/oder der Diskriminator an beliebiger Stelle an dem elektromotorischen Möbelantrieb angesetzt ist oder in einer Komponente des elektromotorischen Möbelantriebs integriert oder einer Komponente des elektromotorischen Möbelantriebs zugeordnet ist. In vorteilhafter Weise ist damit eine sehr hohe Flexibilität des gesamten Systems des elektromotorischen Möbelantriebs gegeben. Beispielsweise ist es somit möglich, die Kommunikationseinheit und/oder den Diskriminator in einem Verbindungskabel, in einem Verstellantrieb, in einer netzabhängigen Spannungsversorgung, in einer Steuereinrichtung, in einem Verstellantrieb oder in einer anderen Komponente zu integrieren oder daran anzusetzen.

In einer weiteren vorteilhaften Ausgestaltung weist die Handbedienung einen manuell betätigbaren Sperrschalter auf, welcher wenigstens das Weiterleiten der drahtlos empfangenen Steuersignale der Fernbedienung unterdrückt. Alternativ schaltet der Sperrschalter die Energiezufuhr der Kommunikationseinheit.

Die Fernbedienung ist in bevorzugter Form als Smartphone ausgebildet. Alternativ ist als Fernbedienung ein speziell für diesen Anwendungsfall ausgebildetes tragbares (Hand-) Gerät mit einem Bedienfeld und einer drahtlosen Übertragungsstrecke vorgesehen.

Die Fernbedienung und die Kommunikationseinheit sind bevorzugt zur Übertragung von Daten bzw. Datenpaketen gemäß dem Bluetooth-Standard ausgebildet. Alternativ oder wahlweise oder zusätzlich kann eine Übertragung gemäß dem WLAN-, DECT- oder ZigBee-Format vorgesehen sein.

Das drahtlose Signal kann über eine unidirektionale oder über eine bidirektionale Funkverbindung übertragen werden. Die Übertragungsstrecke kann im einfachsten Fall als proprietäre Übertragungsstrecke ausgebildet sein. Jedoch sind auch die zuvor genannten bidirektionalen Übertragungsstrecken verwendbar. Ist die Funkübertragungsstrecke als unidirektionale Übertragungsstrecke ausgebildet, erfolgt das Abbilden der Signalstärke bzw. das Abbilden des zur Signalstärke korrespondierenden Zahlenwertes möbelseitig durch eine mit dem Möbel verbundene Komponente des elektromotorischen Möbelantriebs.

Die Erfindung betrifft weiter Möbel mit einem bewegbaren Möbelteil, das einen derartigen elektromotorischen Möbelantrieb aufweist.

Die Erfindung wird nachfolgend anhand von Ausführungsbeispielen mithilfe von Figuren erläutert.

Die Figuren zeigen:
- Fig. 1: eine schematische Perspektivansicht einer beispielhaften Möbelanordnung; und
- Fig. 2: eine schematische Darstellung eines elektromotorischen Möbelantriebs mit Verstellantrieben und einer drahtlosen Fernbedienung.

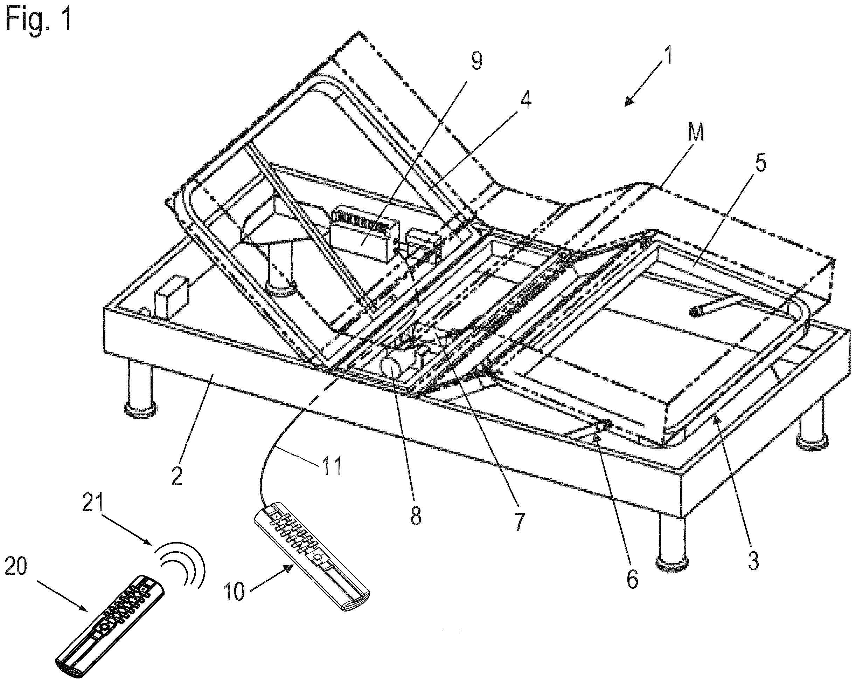

Fig. 1 zeigt eine Möbelanordnung mit einem Möbel 1. Als Möbel 1 ist hier beispielhaft ein Bett dargestellt. Das Möbel 1 weist wenigstens ein Stützelement 3 zur Aufnahme von Gegenständen, einer Polsterung, einer Matratze M und/oder einer Person auf. Das Stützelement 3 ist z.B. als ein Lattenrost, als ebene Stützfläche oder dergleichen ausgebildet und an einem Grundelement 2, hier ein Gestell mit Füßen, mit dem das Möbel 1 an einem Aufstellort, z.B. Fußboden, aufgestellt ist.

Das Stützelement 3 weist im dargestellten Beispiel ein Rückenteil 4 und ein Beinteil 5 auf, welche relativ zu einem weiteren Stützelement oder relativ zu dem Grundelement 2 beweglich gelagert angeordnet sind. Diese bewegliche Anordnung ist hier mittels eines so genannten Bewegungsbeschlags 6 realisiert. Die Bewegung ist verschiebbar und/oder schwenkbar ausgebildet.

Das beweglich gelagerte Rückenteil 4 und das Beinteil 5 sind jeweils mit einem elektromotorischen Verstellantrieb 7, 8 gekoppelt. So ist das Rückenteil 4 mit dem elektromotorischen Verstellantrieb 7 gekoppelt. Zur Bewegung bzw. Verstellung des Beinteils 5 ist der elektromotorische Verstellantrieb 8 vorgesehen.

Die elektromotorischen Verstellantriebe 7, 8 sind vorliegend als Linearantriebe ausgebildet. Die Linearantriebe weisen einen oder eine Anzahl Elektromotoren auf, wobei jedem Motor ein Drehzahlreduziergetriebe mit wenigstens einer Getriebestufe nachgeschaltet ist. Dem Drehzahlreduziergetriebe kann ein weiteres Getriebe, beispielsweise in Form eines Gewindespindelgetriebes, nachgeschaltet sein, welches aus der Drehbewegung des Motors eine Linearbewegung eines Abtriebsgliedes erzeugt. Das letzte Getriebeglied oder ein damit verbundenes weiteres Glied bildet das Abtriebsglied. Das Abtriebsglied des jeweiligen elektromotorischen Verstellantriebs steht mit dem jeweiligen Möbelbauteil (Rückenteil 4, Beinteil 5) oder alternativ mit einem mit dem Grundelement 2 verbundenes Bauteil in Verbindung, so dass bei einem Betrieb des Elektromotors des jeweiligen Verstellantriebs 7, 8 die beweglichen Möbelbauteile 4, 5 relativ zueinander bzw. relativ zum Grundelement 2 verstellt werden.

Die elektromotorischen Verstellantriebe 7, 8 sind mit einer Steuereinrichtung 9, auch Motorsteuerung genannt, verbunden. Diese Verbindung kann z.B. als steckbare Kabelverbindung ausgeführt sein, was hier nicht näher dargestellt ist. Die Steuereinrichtung 9 weist eine elektrische Versorgungseinheit auf, welche die elektrische Energie, z.B. aus dem Netz, für die elektromotorischen Verstellantriebe 7, 8 bereitstellt. Dazu ist die Steuereinrichtung 9 über ein in diesem Beispiel nicht gezeigtes Netzkabel mit einem Netzstecker mit einem Netzanschluss verbindbar. Der Netzstecker leitet über das Netzkabel die eingangsseitige Netzspannung zu der elektrischen Versorgungseinheit der Steuereinrichtung 9, welche sekundärseitig eine Kleinspannung in Form einer Gleichspannung abgibt und diese zu einer Steuereinrichtung weiterleitet.

Alternativ hierzu ist der Steuereinrichtung 9 eine nicht näher dargestellte netzabhängige Spannungsversorgung mit Netzeingang und mit sekundärseitigem Kleinspannungsausgang vorgeschaltet, welche über die Leitung die Kleinspannung in Form einer Gleichspannung zuführt.

Mit der Steuereinrichtung 9 ist eine Handbedienung 10 über ein in diesem Ausführungsbeispiel zumindest an der Handbedienung 10 fest montiertes Kabel 11 verbunden.

Die Handbedienung 10 weist Bedienelemente auf, mittels derer die elektromechanischen Verstellantriebe 7, 8 über die Steuereinrichtung 9 steuerbar sind.

Die Bedienelemente können beispielsweise als Taster und/oder Schalter ausgebildet sein. Ferner kann die Handbedienung 10 mit einem Meldeelement, z.B. einer Leuchtiode oder einer Anzeigeeinheit, ausgerüstet. Das Meldeelement dient z.B. zur Funktionsanzeige bzw. Rückmeldung, Fehleranzeige usw..

Zusätzlich zur Handbedienung 10 kann eine Bedienung der Verstellantriebe 7, 8 bzw. von anderen mit der Steuereinrichtung 9 verbundenen elektrischen Einheiten über eine Fernbedienung 20 erfolgen. Die Fernbedienung 20 weist ebenfalls Bedienelemente auf sowie eine Übertragungseinheit für drahtlose Signale 21. Die Übertragungseinheit umfasst zumindest einen Sender, ggf. aber auch einen Empfänger für die drahtlose Signale 21. Die Fernbedienung 20 kommuniziert bei dem dargestellten Ausführungsbeispiel mit der Handbedienung 10, die zu diesem Zweck ebenfalls eine entsprechende Kommunikationseinheit aufweist. Diese umfasst zumindest einen Empfänger für die drahtlose Signale 22. Falls ein bidirektionaler Datenaustausch zwischen Handbedienung 10 und Fernbedienung 20 vorgesehen ist, ist bei der Übertragungseinheit der Handbedienung 10 weiter ein Empfänger vorhanden.

Das Betätigen eines Bedienelements der Fernbedienung 20 wird zur Handbedienung 10 übertragen. Das empfangene Signal wird dort umgesetzt und vorliegend über das Kabel 11 - als entsprechendes Signal an die Steuereinrichtung 9 übermittelt.

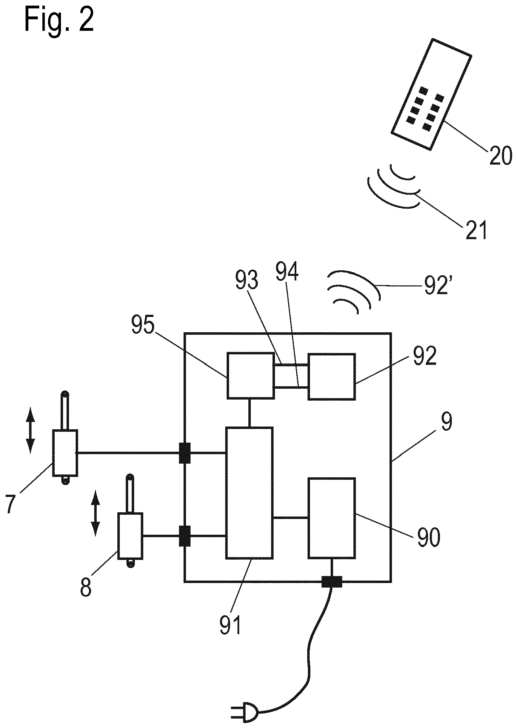

Dabei kann die Handbedienung Sperrelemente, z.B. als Sperrschalter, ggf. als Schlüsselschalter, aufweisen, über die alle oder einzelne Funktionen der Steuereinrichtung 9 generell oder nur von einer Betätigung durch die Fernbedienung 20 ausgeschlossen werden können. In einer alternativen Ausgestaltung, die in Fig. 2 wiedergegeben ist und nachfolgend noch detaillierter beschrieben ist, ist die Kommunikationseinheit nicht in der (dann ggf. optionalen) Handbedienung 10 angeordnet, sondern unmittelbar in der Steuereinrichtung 9.

Es wird angemerkt, dass die Übertragung zwischen der Handbedienung 10 und der Fernbedienung 20 auch bidirektional ausgebildet sein kann, um auch Signale bzw. Informationen von der Steuereinrichtung 9 über die Handbedienung 10 an die Fernbedienung 20 übertragen zu können. Auch eine Betätigung von Bedienelementen an der Handbedienung 10 kann so an der Fernbedienung 20 signalisiert werden.

Als Fernbedienung 20 kann eine eigens konzipiertes (Hand-) Gerät eingesetzt werden. Es ist jedoch insbesondere auch möglich, ein universelles Mobilgerät, wie z.B. ein Smartphone oder einen Tablett-Computer, mit entsprechender Software ("App") als Fernbedienung 20 einzusetzen.

Anmeldungsgemäß ist vorgesehen, eine Empfangsstärke der empfangegen drahtlosen Signale 21 auszuwerten und die Verstellantriebe 7, 8 nur dann zu betätigen, wenn die Empfangsstärke einen vorgegebenen Schwellenwert übersteigt. Dieses wird nachfolgend im Zusammenhang mit dem Ausführungsbeispiel der Fig. 2 näher erläutert.

Fig. 2 zeigt in Form eines schematischen Blockschaltbilds ein weiteres Ausführungsbeispiel eines elektromotorischen Möbelantriebs. Dieser weist wiederum eine Steuereinrichtung 9 auf, die dazu eingerichtet ist, die hier beispielhaft zwei dargestellten Verstellantriebe 7, 8 zu betätigen.

Die Steuereinrichtung 9 umfasst eine Stromversorgung 90, die insbesondere als ein Schaltnetzteil ausgebildet ist. In alternativen Ausgestaltungen kann die Stromversorgung 90 extern von der Steuereinrichtung 9 angeordnet sein.

Weiter umfasst die Steuereinrichtung 9 eine zentrale Steuereinheit 91, die Schaltorgane (z.B. Transistoren oder Relais) zur Ansteuerung der Verstellantriebe 7, 8 aufweist. Die Steuereinheit 91 ist dazu eingerichtet, Steuersignale entgegen zu nehmen, die die Ansteuerung der Verstellantriebe 7, 8 betreffen, und die Verstellantriebe 7, 8 entsprechend zu schalten.

Die Steuereinrichtung 9 umfasst weiterhin eine Kommunikationseinheit 92, die vorliegend zum Empfang von Bedienkommandos unter anderem für die Verstellantrieben 7, 8 auf einem drahtlosen Kommunikationsweg eingerichtet ist. Zu diesem Zweck weist die Kommunikationseinheit 92 einen Empfangsteil auf, der von einer Fernbedienung 20 ausgesendete drahtlose Signale 21 empfängt.

Die Kommunikationseinheit 92 kann dabei bidirektional ausgebildet sein und ihrerseits in der Lage sein, drahtlose Signale 92' abzugeben, die beispielsweise von der Fernbedienung 20 entgegengenommen werden. Diese von der Steuereinrichtung 9 zur Fernbedienung 20 gesendeten drahtlosen Signale 92' können eingesetzt werden, um bestimmte Betriebszustände, beispielsweise eine Stellung der Verstellantriebe 7,8, zur Visualisierung oder zur Kontrolle an die Fernbedienung 20 zu senden. Die drahtlosen Signale 92' können jedoch auch im Rahmen des Übertragungsprotokolls, das die Fernbedienung 20 und die Kommunikationseinheit 92 benutzen, verwendet werden, um einen Datenempfang zu bestätigen und/oder Adressen und Übertragungskanäle auszuhandeln. Mit anderen Worten kann eine bidirektionale Übertragung zwischen der Fernbedienung 20 und der Kommunikationseinheit 92 auch dann umgesetzt sein, wenn Nutzinformationen lediglich von der Fernbedienung 20 zur Kommunikationseinheit 92 gesendet werden.

Wie eingangs bereits erwähnt kann jedoch auch alternativ die Fernbedienung 20 das von ihr empfangene drahtlose Signal 92' hinsichtlich der Höhe der Signalstärke auswerten und bestimmen, ob ein Verstellantrieb 7, 8 angesteuert oder ein entsprechender Tastendruck eines Benutzers der Fernbedienung 20 ignoriert werden soll. Wird in der Fernbedienung 20 festgestellt, dass die Signalstärke des von ihr empfangenen drahtlosen Signals 92' über einem vorgegebenen Schwellenwert liegt, so gibt sie die Steuersignale zur Steuerung des Verstellantriebs 7, 8 frei bzw. sendet diese Steuersignale zum Verfahren des Verstellantriebs 7, 8. Das Vergleichen der Signalstärke des empfangenen Signals mit dem vorgegebenen Schwellenwert erfolgt somit durch die Fernbedienung 20 selbst.

Die Kommunikationseinheit 92 ist dazu eingerichtet, empfangene drahtlose Signale 21 auszuwerten und in Form eines Steuersignals 93, das beispielsweise ein serieller Datenstrom sein kann, weiterzuleiten. Weiter wird von der Kommunikationseinheit 92 ein dem Steuersignal 93 zugeordnetes Empfangsstärkensignal 94 ausgegeben. Das Empfangsstärkensignal 94 beschreibt eine relative oder absolute Signalstärke, mit der das drahtlose Signal 21 von der Kommunikationseinheit 92 empfangen wird.

Die beiden Signale 93, 94 können als getrennte Signale ausgegeben werden und werden im dargestellten Ausführungsbeispiel von einem Diskriminator 95 weiter verarbeitet. In alternativen Ausgestaltungen können das Empfangsstärkensignal 94 und das Steuersignal 93 als ein gemeinsames Signal ausgegeben werden, beispielsweise indem eine Empfangsstärke codiert in einem Datenstrom des Steuersignals 93 mit übertragen wird.

Der Diskriminator 95 umfasst einen Schwellwert für eine Mindestempfangsstärke und ist dazu eingerichtet, das Steuersignal 93 nur dann an die Steuereinheit 91 weiterzuleiten, wenn das zugeordnete Empfangsstärkensignal 94 über dem vorgegebenen Schwellwert liegt. Anmeldungsgemäß wird auf diese Weise erreicht, dass in dem Steuersignal 93 codiert enthaltene Bewegungsbefehle für über die Fernbedienung 20 kontrollierte Komponenten, insbesondere die Verstellantrieben 7, 8, nur dann umgesetzt werden, wenn das drahtlose Signal 21 mit einer bestimmten Mindestempfangsstärke empfangen wird. Es versteht sich, dass der Diskriminator 95 auch in die Steuereinheit 91 integriert sein kann.

Die Empfangsstärke ist neben anderen Faktoren insbesondere von der Entfernung zwischen der Fernbedienung 20 und der Kommunikationseinheit 92 und von dem zwischen den beiden Komponenten liegenden Übertragungsweg abhängig. Durch die Überwachung einer mindestens vorliegenden Empfangssignalstärke kann verhindert werden, dass ein drahtloses Signal 21, das von der Fernbedienung 20 abgegeben wird, während diese sich beispielsweise in einem benachbarten Raum befindet, zu einer Bewegung der Verstellantrieben 7, 8 führt. Auf diese Weise wird eine unkontrollierte Betätigung der Verstellantrieben 7, 8 unterbunden.

Als Fernbedienung 20 kann - insbesondere wenn die Übertragung der drahtlosen Signale 21 gemäß einem Bluetooth- oder WLAN Protokoll oder gemäß einer anderen kurzreichweitigen Funkübertragungstechnik erfolgt - ein Mobiltelefon, insbesondere ein sogenanntes Smartphone, eingesetzt werden. Anders als bei einer speziell für den elektromotorischen Möbelantrieb vorgesehenen Fernbedienung ist bei einem solchen universell nutzbaren Gerät die Gefahr größer, das Gerät auch in benachbarte Räume mitzunehmen und dort, beispielsweise durch ungewollte Betätigung, zur Steuerung des elektromotorischen Möbelantriebs einzusetzen. Der anmeldungsgemäße Vergleich mit dem Schwellenwert kann dieses unterbinden.

In einer Ausgestaltung kann der vorgegebene Schwellenwert fest vorgegeben sein und sich in seiner Höhe an typischen Empfangsstärken, die bei einige Metern Abstand von handelsüblichen Geräten erreicht werden, orientieren. In alternativen Ausgestaltungen kann vorgesehen sein, den Schwellenwert einzustellen zu können. Dieses kann über eine Auswahl verschiedener, ihrerseits vorgegebener Schwellwertstufen erfolgen.

In einer weiteren Ausgestaltung ist es denkbar, dass die Höhe des Schwellenwerts anhand der Höhe empfangener Signalstärken des drahtlosen Signals 21 eingestellt wird. Dazu kann beispielsweise vorgesehen sein, einen Raumbereich, in dem die Fernbedienung 20 nutzbar sein soll, während der Abgabe eines Testsignals abzuschreiten. Während dieser Anlernphase wird die empfangene Empfangsstärke 94 protokolliert und anschließend der Schwellenwert abhängig von einer minimal empfangenen Empfangsstärke gesetzt. Ein solches Verfahren kann analog ausgeführt werden, wenn der Vergleich mit dem Schwellenwert in der Fernbedienung und nicht der Steuereinrichtung durchgeführt wird.

Bei dem Ausführungsbeispiel der Fig. 2 ist die Kommunikationseinheit 92 unmittelbar in der Steuereinrichtung 9 integriert. Es ist jedoch auch denkbar, dass die Kommunikationseinheit 92 extern von der Steuereinrichtung 9 eingeordnet ist, beispielsweise in einem separaten Gehäuse oder, wie im Ausführungsbeispiel der Fig. 1 wiedergegeben, in eine separate Handbedienung 10 integriert, die über ein Kabel 11 mit der Steuereinrichtung 9 gekoppelt ist.

### Bezugszeichenliste

- 1: Möbel
- 2: Grundelement
- 3: Stützelement
- 4: Rückenteil
- 5: Beinteil
- 6: Bewegungsbeschlag
- 7, 8: Verstellantrieb
- 9: Steuereinrichtung
- 10: Handbedienung
- 11: Kabel

- 20: Fernbedienung
- 21: drahtloses Signal

- 90: Stromversorgung
- 91: Steuereinheit
- 92: Kommunikationseinheit
- 92': drahtloses Signal
- 93: Steuersignal
- 94: Empfangsstärkesignal
- 95: Diskriminator

- M: Matratze

## Patentansprüche

1. Elektromotorischer Möbelantrieb mit einer Anzahl Verstellantrieben (7, 8) zur elektromotorischen Bewegung wenigstens eines beweglichen Möbelbauteils relativ zu einem weiteren Möbelbauteil, einer Steuereinrichtung (9) und einer Kommunikationseinheit (92) zum Empfang von drahtlosen Signalen (21) einer Fernbedienung (20), wobei die Verstellantriebe (7, 8) in Abhängigkeit empfangener drahtloser Signale (21) angesteuert werden, **dadurch gekennzeichnet, dass**
die Kommunikationseinheit (92) dazu eingerichtet ist, eine Signalstärke des empfangenen drahtlosen Signals (21) zu bestimmen, und dass die Steuereinrichtung (9) dazu eingerichtet ist, die Verstellantriebe (7, 8) nur dann anzusteuern, wenn die Signalstärke in ihrer Höhe einen vorgegebenen Schwellenwert übersteigt.

2. Elektromotorischer Möbelantrieb nach Anspruch 1, bei dem die Kommunikationseinheit (92) ein Steuersignal (93) abgibt, das den Inhalt der empfangenen drahtlosen Signale (21) wiedergibt, und ein Empfangsstärkesignal (94), das die Signalstärke des empfangenen drahtlosen Signals (21) wiedergibt.

3. Elektromotorischer Möbelantrieb nach Anspruch 2, bei dem die Steuereinrichtung (9) einen Diskriminator (95) aufweist, der mit der Kommunikationseinheit (92) verbunden ist und der das Steuersignal (93) nur dann weiterleitet, wenn das Empfangsstärkesignal (94) in seiner Höhe den vorgegebenen Schwellenwert übersteigt.

4. Elektromotorischer Möbelantrieb nach einem der Ansprüche 1 bis 3, bei dem die Kommunikationseinheit (92) und/oder der Diskriminator (95) in der Steuereinrichtung (9) integriert sind.

5. Elektromotorischer Möbelantrieb nach einem der Ansprüche 1 bis 3, bei dem die Steuereinrichtung (9) mit einem Handschalter (10) verbunden ist, über den die Verstellantriebe (7, 8) kabelgebunden gesteuert werden können.

6. Elektromotorischer Möbelantrieb nach Anspruch 5, bei dem die Kommunikationseinheit (92) und/oder der Diskriminator (95) in dem Handschalter (10) integriert sind.

7. Elektromotorischer Möbelantrieb nach Anspruch 6, bei dem die Handbedienung (10) einen manuell betätigbaren Sperrschalter aufweist, wobei der Sperrschalter in einer Position "sperren" ein Senden von Steuerbefehlen an die Steuereinrichtung (9) zum Betrieb eines jeden Verstellantriebs (7, 8) sperrt.

8. Elektromotorischer Möbelantrieb nach Anspruch 7, **dadurch gekennzeichnet, dass** nur Steuerbefehle, die über die Fernbedienung (20) empfangen werden, gesperrt werden.

9. Elektromotorischer Möbelantrieb nach einem der Ansprüche 1 bis 8, bei dem die Fernbedienung (20) als Smartphone ausgebildet ist.

10. Elektromotorischer Möbelantrieb nach einem der Ansprüche 1 bis 9, bei dem die Fernbedienung drahtlose Signale (21) gemäß dem Bluetooth-, dem WLAN-, dem DECT- oder dem ZigBee-Protokoll sendet.

11. Möbel (1) mit mindestens einem bewegbaren Möbelteil, aufweisend einen elektromotorischen Möbelantrieb gemäß einem der vorherigen Ansprüche.

12. Verfahren zum Steuern eines elektromotorischen Möbelantriebs mit einer Anzahl Verstellantrieben (7, 8) zur elektromotorischen Bewegung wenigstens eines beweglichen Möbelbauteils relativ zu einem weiteren Möbelbauteil, einer Steuereinrichtung (9) und einer Kommunikationseinheit (92) zum Empfangen von drahtlosen Signalen (21) einer Fernbedienung (20), mit den folgenden Schritten:
- Senden von drahtlosen Signalen (21) von der Fernbedienung (20) zu der Kommunikationseinheit (92);
- Empfangen der drahtlosen Signale (21) durch die Kommunikationseinheit (92);
- Ermitteln von Steuersignalen (93) aus den empfangenen drahtlosen Signalen (21);
- Bestimmen einer Signalstärke der empfangenen drahtlosen Signale (21);
- Vergleichen der Signalstärke mit einem vorgegebenen Schwellenwert;
- Senden von drahtlosen Signalen (21) von der Fernbedienung (20) zu der Kommunikationseinheit (92) zum Ansteuern mindestens einen Verstellantriebs (7, 8) gemäß den Steuersignalen (93), wenn die Signalstärke in ihrer Höhe den vorgegebenen Schwellenwert übersteigt; und
- Ignorieren der Steuersignale (93), wenn die Signalstärke in ihrer Höhe den vorgegebenen Schwellenwert nicht übersteigt.

13. Verfahren zum Steuern eines elektromotorischen Möbelantriebs mit einer Anzahl Verstellantrieben (7, 8) zur elektromotorischen Bewegung wenigstens eines beweglichen Möbelbauteils relativ zu einem weiteren Möbelbauteil, einer Steuereinrichtung (9) und einer Kommunikationseinheit (92) zum Austauschen von drahtlosen Signalen (21, 92') mit einer Fernbedienung (20), mit den folgenden Schritten:
- Senden von drahtlosen Signalen (92') von der Kommunikationseinheit (92) zu der Fernbedienung (20);
- Empfangen der drahtlosen Signale (92') durch die Fernbedienung (20);
- Bestimmen einer Signalstärke der empfangenen drahtlosen Signale (92');
- Vergleichen der Signalstärke mit einem vorgegebenen Schwellenwert;
- Senden von drahtlosen Signalen (21) von der Fernbedienung (20) zu der Kommunikationseinheit (92) zum Ansteuern mindestens einen Verstellantriebs (7, 8), dann und nur dann, wenn die Signalstärke in ihrer Höhe den vorgegebenen Schwellenwert übersteigt.

14. Verfahren nach Anspruch 12 oder 13, bei dem der Schwellenwert aus der Höhe der Signalstärke eines zuvor während einer Anlernphase empfangenen drahtlosen Signals (21, 92') bestimmt wird.

## Claims

1. Electromotive furniture drive having a number of adjusting drives (7, 8) for electromotive movement of at least one movable furniture component relative to another furniture component, a control device (9) and a communication unit (92) for receiving wireless signals (21) of a remote control (20), wherein the adjusting drives (7, 8) are controlled in response to received wireless signals (21), **characterized in that** the communication unit (92) is adapted to determine a signal strength of the received wireless signal (21), and that the control device (9) is adapted to control the adjusting drives (7, 8) only when the signal strength in magnitude exceeds a predetermined threshold value.

2. Electromotive furniture drive according to claim 1, wherein the communication unit (92) outputs a control signal (93) representing the content of the received wireless signals (21) and a reception strength signal (94) representing the signal strength of the received wireless signal (21).

3. Electromotive furniture drive according to claim 2, wherein the control device (9) comprises a discriminator (95) which is connected to the communication unit (92) and which forwards the control signal (93) only when the reception strength signal (94) exceeds in magnitude the predetermined threshold.

4. Electromotive furniture drive according to one of the claims 1 to 3, wherein the communication unit (92) and/or the discriminator (95) are integrated in the control device (9).

5. Electromotive furniture drive according to one of the claims 1 to 3, wherein the control device (9) is connected to a handset (10), via which the adjusting drives (7, 8) can be controlled by a cable.

6. Electromotive furniture drive according to claim 5, wherein the communication unit (92) and/or the discriminator (95) are integrated in the handset (10).

7. Electromotive furniture drive according to claim 6, wherein the handset (10) comprises a manually operable lock switch, wherein the lock switch, in a position "lock", locks a transmission of control commands to the control device (9) for the operation of each adjusting drive (7, 8).

8. Electromotive furniture drive according to claim 7, **characterized in that** only control commands that are received via the remote control (20) are locked.

9. Electromotive furniture drive according to one of the claims 1 to 8, wherein the remote control (20) is designed as a smartphone.

10. Electromotive furniture drive according to one of the claims 1 to 9, wherein the remote control transmits wireless signals (21) according to the Bluetooth, WLAN, DECT or ZigBee protocol.

11. Furniture (1) with at least one movable furniture part, comprising an electromotive furniture drive according to one of the preceding claims.

12. Method for controlling an electromotive furniture drive having a number of adjusting drives (7, 8) for electromotive movement of at least one movable furniture component relative to another furniture component, a control device (9) and a communication unit (92) for receiving wireless signals (21) of a remote control (20), with the following steps:
- sending wireless signals (21) from the remote control (20) to the communication unit (92);
- receiving the wireless signals (21) by the communication unit (92);
- determining control signals (93) from the received wireless signals (21);
- determining a signal strength of the received wireless signals (21);
- comparing the signal strength with a predetermined threshold value;
- transmitting wireless signals (21) from the remote control (20) to the communication unit (92) for controlling at least one adjusting drive (7, 8) in accordance with the control signals (93) when the signal strength exceeds in magnitude the predetermined threshold value; and
- ignoring the control signals (93) if the signal strength does not exceed in magnitude the predetermined threshold value.

13. Method for controlling an electromotive furniture drive having a number of adjusting drives (7, 8) for electromotive movement of at least one movable furniture component relative to another furniture component, a control device (9) and a communication unit (92) for exchanging wireless signals (21, 92') with a remote control (20), with the following steps:
- sending wireless signals (92') from the communication unit (92) to the remote control (20);
- receiving the wireless signals (92') by the remote control (20);
- determining a signal strength of the received wireless signals (92');
- comparing the signal strength with a predetermined threshold value;
- transmitting wireless signals (21) from the remote control (20) to the communication unit (92) for controlling at least one adjusting drive (7, 8) if and only if the signal strength exceeds in magnitude the predetermined threshold value in magnitude.

14. Method according to claim 12 or 13, wherein the threshold value is determined from the magnitude of the signal strength of a wireless signal (21, 92') previously received during a learning phase.

## Revendications

1. Entraînement de meuble à moteur électrique avec un certain nombre d'entraînements de déplacement (7, 8) pour le mouvement mû par un moteur électrique d'au moins une partie de meuble mobile par rapport à une autre partie de meuble, avec une installation de commande (9) et avec une unité de communication (92) destinée à recevoir des signaux sans fil (21) d'une télécommande (20), dans lequel les entraînements de déplacement (7, 8) sont actionnés en fonction de signaux sans fil (21) reçus, **caractérisé en ce que** l'unité de communication (92) est configurée pour déterminer une intensité de signal du signal sans fil (21) reçu et **en ce que** l'installation de commande (9) est configurée pour n'activer les entraînements de déplacement (7, 8) que lorsque l'intensité du signal dépasse une valeur de seuil prédéterminée.

2. Entraînement de meuble à moteur électrique selon la revendication 1, dans lequel l'unité de communication (92) émet un signal de commande (93) reproduisant le contenu des signaux sans fil (21) reçus et un signal de force de réception (94) qui indique la force du signal sans fil (21) reçu.

3. Entraînement de meuble à moteur électrique selon la revendication 2, dans lequel l'installation de commande (9) comprend un discriminateur (95) qui est relié à l'unité de communication (92) et qui ne transmet le signal de commande (93) que si le signal de force de réception (94) dépasse la valeur de seuil prédéterminée.

4. Entraînement de meuble à moteur électrique selon l'une des revendications 1 à 3, dans lequel l'unité de communication (92) et/ou le discriminateur (95) sont intégrés dans l'installation de commande (9).

5. Entraînement de meuble à moteur électrique selon l'une des revendications 1 à 3, dans lequel l'installation de commande (9) est reliée à un interrupteur manuel (10) par lequel les entraînements de déplacement (7, 8) peuvent être commandés via une connexion câblée.

6. Entraînement de meuble à moteur électrique selon la revendication 5, dans lequel l'unité de communication (92) et/ou le discriminateur (95) sont intégrés dans l'interrupteur manuel (10).

7. Entraînement de meuble à moteur électrique selon la revendication 6, dans lequel la commande manuelle (10) comporte un interrupteur de verrouillage à actionnement manuel, lequel interrupteur de verrouillage, dans sa position de verrouillage, bloque l'émission d'ordres de commande à l'installation de commande (9) pour le fonctionnement de chaque entraînement de déplacement (7, 8).

8. Entraînement de meuble à moteur électrique selon la revendication 7, **caractérisé en ce que** seuls les ordres de commande reçus par la télécommande (20) sont bloqués.

9. Entraînement de meuble à moteur électrique selon l'une des revendications 1 à 8, dans lequel la télécommande (20) est réalisée comme un smartphone.

10. Entraînement de meuble à moteur électrique selon l'une des revendications 1 à 9, dans lequel la télécommande émet des signaux sans fil (21) selon le protocole Bluetooth, WLAN, DECT ou ZigBee.

11. Meuble (1) avec au moins une partie de meuble mobile, présentant un entraînement de meuble à moteur électrique selon l'une des revendications précédentes.

12. Procédé pour la commande d'un entraînement de meuble à moteur électrique avec un certain nombre d'entraînements de déplacement (7, 8) pour le mouvement mû par un moteur électrique d'au moins une partie de meuble mobile par rapport à une autre partie de meuble, avec une installation de commande (9) et avec une unité de communication (92) destinée à recevoir des signaux sans fil (21) d'une télécommande (20), comprenant les étapes suivantes :
- émission de signaux sans fil (21) par la télécommande (20) vers l'unité de communication (92) ;
- réception des signaux sans fil (21) par l'unité de communication (92) ;
- détermination de signaux de commande (93) à partir des signaux sans fil (21) reçus ;
- détermination d'une force de signal des signaux sans fil (21) reçus ;
- comparaison de la force de signal à une valeur de seuil prédéterminée ;
- émission de signaux sans fil (21) par la télécommande (20) vers l'unité de communication (92) pour actionner au moins un entraînement de déplacement (7, 8) selon les signaux de commande (93) quand la force de signal dépasse la valeur de seuil prédéterminée ; et
- non prise en compte des signaux de commande (93), quand la force de signal ne dépasse pas la valeur de seuil prédéterminée.

13. Procédé pour la commande d'un entraînement de meuble à moteur électrique avec un certain nombre d'entraînements de déplacement (7, 8) pour le mouvement mû par un moteur électrique d'au moins une partie de meuble mobile par rapport à une autre partie de meuble, avec une installation de commande (9) et avec une unité de communication (92) destinée à échanger des signaux sans fil (21, 92') avec une télécommande (20), comprenant les étapes suivantes :
- émission de signaux sans fil (92') par l'unité de communication (92) vers la télécommande (20) ;
- réception des signaux sans fil (92') par la télécommande (20) ;
- détermination d'une force de signal des signaux sans fil (92') reçus ;
- comparaison de la force de signal à une valeur de seuil prédéterminée ;
- émission de signaux sans fil (21) par la télécommande (20) vers l'unité de communication (92) pour actionner au moins un entraînement de déplacement (7, 8) si et seulement si la force de signal dépasse la valeur de seuil prédéterminée.

14. Procédé selon la revendication 12 ou 13, dans lequel la valeur de seuil est déterminée à partir de la force de signal d'un signal sans fil (21, 92') reçu antérieurement pendant une phase d'apprentissage.
